Europäisches Patentamt

European Patent Office

Office européen des brevets

(19)

(11) **EP 1 086 800 A1**

(12) **EUROPÄISCHE PATENTANMELDUNG**

(43) Veröffentlichungstag:
    **28.03.2001 Patentblatt 2001/13**

(51) Int Cl.⁷: **B29C 51/14**, B29C 67/00,
    B32B 15/08, B29C 51/42,
    B29C 51/08

(21) Anmeldenummer: **99810843.5**

(22) Anmeldetag: **21.09.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(71) Anmelder: **Alusuisse Technology & Management AG**
    **8212 Neuhausen am Rheinfall (CH)**

(72) Erfinder: **Zeiter, Patrik**
    **8044 Zürich (CH)**

(54) **Verfahren zum Herstellen von Formpackungen**

(57)    Aus einem Metall-Kunststoff-Verbund oder einer ein- bzw. beidseitig lackierten Metallfolie werden in einem Umformverfahren Formverpackungen mit einer oder mehreren Vertiefungen hergestellt. Die Festigkeit einzelner oder mehrerer Kunststoffschichten des Metall-Kunststoff-Verbundes wird vor und/oder während wenigstens eines Umformschrittes durch gezielte Führung des Relaxationsverhaltens der Kunststoffschichten des Metall-Kunststoff-Verbundes erhöht. Der Umformschritt kann ein Streck- oder Tiefziehen sein. Dazu wird der Metall-Kunststoff-Verbund oder wenigstens einzelne oder mehrere, insbesondere aussen liegende, Kunststoffschichten des Metall-Kunststoff-Verbundes vor und/oder während wenigstens eines Umformschrittes auf Temperaturen von weniger als +10°C, vorzugsweise weniger als 0°C, insbesondere weniger als -5°C und von höher als -100°C, vorzugsweise höher als -50°C, vorteilhaft höher als -30°C, gekühlt.

EP 1 086 800 A1

Printed by Jouve, 75001 PARIS (FR)

**Beschreibung**

Vorliegende Erfindung betrifft ein Verfahren zum Herstellen von Formverpackungen mit einer oder mehreren Vertiefungen durch Umformen eines Verpackungsmaterials in einem oder mehreren Umformschritten, wobei das Verpackungsmaterial eine ein- oder beidseitig mit einer oder mehreren Kunststoffschichten kaschierten, extrusionsbeschichteten oder lackierten Metallfolie ist. Weiterer Gegenstand der Erfindung ist eine Vorrichtung zum Herstellen von Formverpackungen sowie eine Formverpackung.

Es ist bekannt, Formverpackungen wie z.B. Bodenteile von Blisterpackungen oder andere Verpackungsbehälter, durch beispielsweise Tiefziehen, Streckziehen oder Thermoformen herzustellen. Die Formverpackungen bestehen üblicherweise aus Metall-Kunststoff-Verbunden oder lackbeschichteten Metallfolien. Die Metall-Kunststoff-Verbunde sind insbesondere mit einer oder mehreren Kunststoffschichten kaschierte oder extrusionsbeschichtete Metallfolien, wobei ein Metall-Kunststoff-Verbund noch aussen liegende Lackschichten aufweisen kann.

Unter Kunststoffschichten sind in diesem Text Folien oder Schichten aus Kunststoff, welche z.B. durch Kaschieren oder Extrusionsbeschichtung zu einem Verbund verarbeitet werden, sowie Lackschichten zu verstehen.

Metall-Kunststoff-Verbunde bzw. lackbeschichtete Metallfolien, welche in diesem Text der Einfachheit halber nachfolgend zusammenfassend als Verpackungsmaterial bezeichnet sind, werden in der Regel kalt umgeformt. Unter "Kaltumformung" sind Umformprozesse bei Raumtemperaturen, d.h. bei Temperaturen zwischen wenigstens +10°C und höchstens +35°C, und insbesondere zwischen +20°C und +30°C, zu verstehen.

Ein definitionsgemässes Verpackungsmaterial kann neben Metallfolien und Kunststoffschichten auch weitere Beschichtungen aus Metall, keramischen Stoffen und dergl. enthalten.

Die Umformung eines Verpackungsmaterials z.B. durch Streck- oder Tiefziehen erfolgt in der Regel mittels Umformwerkzeugen mit einem Stempel und einer Matrize, enthaltend eine oder mehrere Gesenköffnungen entsprechend der Anzahl der zu formenden Vertiefungen, und gegebenenfalls einem Niederhalter.

Beim Tiefziehen wird das Verpackungsmaterial auf die Matrize gebracht und anschliessend ein Stempel gegen das Verpackungsmaterial bewegt. Der Stempel greift mit zunehmender Absenkung unter Verformung des Verpackungsmaterials in die Gesenköffnung der Matrize.

Das Verpackungsmaterial kann während des Tiefziehens vom Rand her nachgleiten, wobei ein Niederhalter gegebenenfalls zur Führung des nachgleitenden Materials eingesetzt wird.

Beim Streckziehverfahren wird das Verpackungsmaterial zwischen der Matrize und einen Niederhalter klemmend festgehalten und anschliessend ein Stempel gegen das Verpackungsmaterial bewegt. Der Stempel greift mit zunehmender Absenkung in die Gesenköffnungen der Matrize und verformt bzw. dehnt dabei das Verpackungsmaterial. In der Regel wird beim Streckziehen nur der Teil des Verpackungsmaterials, der im Bereich der Gesenköffnung liegt, gedehnt.

Aus dem planen Verpackungsmaterial wird eine Formverpackung mit einer oder einer Mehrzahl von Vertiefungen geformt. Die Vertiefungen können von Schultern umgeben sein, welche dem Verpackungsmaterial in ursprünglicher Planlage entsprechen.

Eine zu starke Dehnung der Metallfolie, z.B. der Aluminiumfolie, des Verpackungsmaterials bei Streckziehoder Tief-Streckzieh-Prozessen kann jedoch zu lokalen und mit fortschreitender Dehnung sich weiter ausbreitenden Einschnürungen in der Metallfolie und somit zu Riss- und Porenbildung führen. Da die Metallfolie des Verpackungsmaterials unter anderem als Sperrschicht gegen Gase, Feuchtigkeit und Aromastoffe dient, darf die Metallfolie jedoch durch den Umformprozess nicht beschädigt oder porös bzw. durchlässig werden.

Mit Streckziehen erzielt man bei einer Kaltumformung eines metallfolienhaltigen Verpackungsmaterials aus vorgenannten Gründen in der Regel eine geringe Steigung der Seitenwandungen der Vertiefungen. Dies führt zu grossen Tiefungsverhältnissen, wobei unter Tiefungsverhältnis das Verhältnis von Durchmesser der Vertiefung zur Höhe der Vertiefung zu verstehen ist. Man erhält demzufolge zu grosse Verpackungen im Verhältnis zum Füllgut. Mit einem Ein-Schritt-Streckziehverfahren werden beispielsweise Tiefungsverhältnisse von rund 2,8 erreicht.

Eine Möglichkeit das Tiefungsverhältnis zu optimieren liegt in der Anwendung eines Zwei- oder Mehr-Schritt-Umformverfahrens als reines Streckziehen oder als Kombination von Streck- und Tiefziehen.

Die WO 97/21534 beschreibt ein Umformverfahren durch Streckziehen, bei welchem das Verpackungsmaterial in einem ersten Schritt oder in ersten Schritten, beispielsweise mit einem Stempel erhöhter Reibung, vorgestreckt und anschliessend in einem zweiten Schritt oder in zweiten Schritten in seine endgültige Form, beispielsweise mit einem Stempel niedriger Reibung, streckgezogen wird. Mit diesem Verfahren werden beispielsweise Tiefungsverhältnisse von rund 2,4 erreicht. Die Anwendung einer Mehrschritt-Umformtechnologie erhöht jedoch den Produktionsaufwand.

Durch die Dehnung des Verpackungsmaterials im Bereich der Vertiefung während eines Streckziehens aber auch während eines Tiefziehens büssen des weiteren insbesondere der Wand- und Bodenbereich sowie die Knickzonen in der Vertiefung an Festigkeit und Steifigkeit ein. Die Vertiefung wird dadurch anfälliger auf Dellenbildung.

Aufgabe vorliegender Erfindung ist es, ein Umformverfahren zu beschreiben, welches eine gleichmässige Dehnung der Metallfolie im Verpackungsmaterial bewirkt, und durch welches das umgeformte Verpackungsmaterial insbesondere im Bereich der Vertiefungen eine möglichst optimale Festigkeit beibehält.

Das Umformverfahren zur Herstellung von Formverpackungen gemäss Erfindung zeichnet sich dadurch aus, dass die Festigkeit einzelner oder mehrerer Kunststoffschichten des Verpackungsmaterials vor und/oder während wenigstens eines Umformschrittes durch gezielte Führung des Relaxationsverhaltens der Kunststoffschichten erhöht wird.

Metallfolien, z.B. Aluminiumfolien, im Verbund mit Kunststoffschichten sind erfahrungsgemäss dehnfähiger als reine Metallfolien derselben Wanddicke, da die an die Metallfolie haftende Kunststoffschicht oder -schichten einer übermässigen lokalen Dehnung der Metallfolie, welche zu Einschnürungen führt, entgegen wirkt. Die Dehnung der Metallfolie wird dank der Kunststoffschichten vielmehr gleichmässiger über seine Fläche verteilt.

Die Metallfolie des Verpackungsmaterials neigen aber bei starker oder übermässiger Dehnung ebenfalls zu Einschnürungen. Je höher die Festigkeit der aufliegenden Kunststoffschicht jedoch ist, desto weniger kommt es während der Dehnung zu solchen Einschnürungen, d.h. desto grösseren Dehnungen kann das Verpackungsmaterial ausgesetzt werden. Aus diesem Grund werden beispielsweise bevorzugt Verpackungsmaterialien mit orientierten Kunststoff-Folien verwendet, welche in Dehnungsrichtung eine erhöhte Festigkeit aufweisen und somit höhere Dehnungen des Verpackungsmaterials ermöglichen.

Die Erhöhung der Festigkeit des Kunststoffes wird erfindungsgemäss durch eine Änderung im visko-elastischen Verhalten der Kunststoffschichten im Verpackungsmaterial erreicht. Unter visko-elastischem Verhalten versteht man eine zeitabhängige Elastizität, die auf einer verzögerten Gleichgewichtseinstellung der Moleküle im Kunststoffwerkstoff beruht. Die Elastizität wird in der Regel durch das sogenannte Elastizitätsmodul (E-Modul) festgelegt.

Unter der Dehnung $\varepsilon$ ist eine relative Längenänderung $\Delta l$ einer Strecke $l$ zu verstehen, welche sich wie folgt berechnet:

$$\varepsilon = \Delta l \, / \, l$$

Die Zeitabhängigkeit findet z.B. im Kriechen, d.h. der Dehnung unter konstanter Spannung und in einem verzögerten Spannungsabbau bei Vorgabe eines Dehnungssprunges Ausdruck. Die Zeitabhängigkeit wird mit der sogenannten Relaxationszeit umschrieben. Unter Relaxation wird die Wiedereinstellung eines Gleichgewichtes und unter Relaxationszeit die Zeitspanne für das Einstellen des Gleichgewichtszustandes verstanden.

Das visko-elastische Verhalten eines Kunststoffes ist ebenfalls temperaturabhängig.

Die Zeit- und Temperaturabhängigkeit des E-Moduls zeichnet sich unter anderem dadurch aus, dass bei tiefen Temperaturen und/oder hohen Dehnungsraten die Relaxationsmechanismen quasi eingefroren sind und der E-Modul dementsprechend höher ist, wobei unter Dehnungsrate das Dehnungsmass der Kunststoffschicht in einem bestimmten Zeitintervall zu verstehen ist. Der Kunststoff weist folglich bei tieferen Temperaturen und/oder höheren Dehnungsraten eine höhere Festigkeit auf.

Die Abhängigkeit des Relaxationsverhaltens und somit des E-Moduls von Temperatur und Zeit, d.h. Beanspruchungszeit, ist durch das sogenannte Zeit-Temperatur-Verschiebungsprinzip beschrieben und durch die Arrhenius-Gleichung in eine mathematische Form gebracht.

Das Zeit-Temperatur-Verschiebungsprinzip gilt z.B. für Elastomere, amorphe und teilkristalline Kunststoffe sowie für verstreckte Thermoplaste.

Weitere Ausführungen über das elastische Verhalten von festen Kunststoffen sind beispielsweise in Georg Menges, Werkstoffkunde Kunststoffe, 4. Aufl., 1998, Verlag Hanser Carl, München, unter Kap. 6.2. "Elastisches Verhalten von Kunststoffen", S. 112-133 zu finden.

In einer zweckmässigen Ausführung der Erfindung weist das Verpackungsmaterial oder wenigstens einzelne oder mehrere, insbesondere aussen liegende, Kunststoffschichten des Verpackungsmaterials vor und/oder während wenigstens eines Umformschrittes Temperaturen von weniger als +10°C (Grad Celsius) auf.

Unter aussen liegenden Schichten sind hierbei die abschliessenden Schichten eines Verpakkungsmaterials zu verstehen.

In weiterer Ausgestaltung der Erfindung weist das Verpackungsmaterial oder wenigstens aussen liegende Kunststoffschichten des Verpackungsmaterials vor und/oder während wenigstens eines Umformschrittes eine Temperatur von weniger als +5°C, vorzugsweise weniger als 0°C, insbesondere weniger als -5°C und von höher als -100°C, vorzugsweise höher als -50°C, vorteilhaft höher als -30°C, insbesondere höher als -20°C, auf.

Zum Erreichen der tiefen Temperaturen wird das Verpackungsmaterial zweckmässig vor und/oder während des Umformschrittes gekühlt.

Wird das Verpackungsmaterial vor dem Umformschritt gekühlt, so können beispielsweise ganze Coils von Verpackungsmaterial auf Temperaturwerte von weniger als +10°C, vorzugsweise weniger als +5°C, vorteilhaft weniger als 0°C, insbesondere weniger als -5°C, gekühlt werden, wobei unter "Coil" als Rollenware vorliegendes Verpackungsmaterial zu verstehen ist. Die minimale Temperatur, auf welche die Coils gekühlt werden, kann z.B. - 100°C betragen.

Die Coils weisen, insbesondere aufgrund des Metallgehaltes des Verpackungsmaterials eine grosse Wärmekapazität auf. Das Verpackungsmaterial eines gekühlten Coils erwärmt sich somit nach Verlassen der Kühlstation bis zu seiner Verarbeitung zu Formverpackungen äusserst langsam.

Des weiteren kann das abgewickelte Verpackungsmaterial unmittelbar vor dem Umformschritt eine der Umformstation vorgeschaltete Kühlstation durchlaufen oder in der Umformstation selbst vorgekühlt werden. Die vorgeschaltete Kühlung kann auch für Verpackungsmaterialien eines gekühlten Coils angewendet werden.

Die Kühlung des Verpackungsmaterials während der Umformung geschieht zweckmässig über das Umformwerkzeug. Dies kann beispielsweise ein gekühlter Stempel und/oder eine gekühlte Matrize sein. Es kann des weiteren vorgesehen sein, dass beispielsweise ein Stempel bis zu einem ersten Kontakt einer Teilfläche der verformungswirksamen Stempeloberfläche mit dem Verpackungsmaterial vorgetrieben wird und zwecks Kühlung des Verpakkungsmaterials eine gewisse Zeit, z.B. 0,5 bis 5 s (Sekunden), in verharrender Position gehalten wird und anschliessend zwecks Umformung des Verpackungsmaterials weiter bis zu seiner Endposition in die Ausnehmung der Matrize vorgetrieben wird.

Das gekühlte Verpackungsmaterial kann beispielsweise über den gesamten Querschnitt des Verpackungsmaterials während der Umformung ein gleichmässiges Temperaturprofil, d.h. ein Temperaturprofil mit Temperaturgradienten um den Wert 0, aufweisen.

In einer weiteren Variante weist das gekühlte Verpackungsmaterial während der Umformung über seinen Querschnitt zweckmässig ein strukturiertes Temperaturprofil, d.h. ein Temperaturprofil mit positiven und/oder negativen Temperaturgradienten, auf. Das Temperaturprofil kann innerhalb der Temperatureckwerte von -100°C bis +10°C verlaufen. Es ist auch möglich, dass das Temperaturprofil Temperaturwerte ausserhalb des genannten Bereichs und insbesondere oberhalb von +10°C aufweist, wobei jedoch wenigstens eine Kunststoffschicht Temperaturwerte innerhalb des genannten Bereichs von -100° bis +10°C aufweist.

Ein Temperaturprofil durch den Querschnitt eines Verpackungsmaterials kann insbesondere innerhalb der Kunststoffschichten aufgrund der geringen Temperaturleitfähigkeit von Kunststoff positive und/oder negative Temperaturgradiente aufweisen. Innerhalb der Metallfolie, insbesondere der Aluminiumfolie, verläuft das Temperaturprofil aufgrund der hohen Temperaturleitfähigkeit des Metalles in der Regel ziemlich gleichmässig.

Wird beispielsweise ein Verpackungsmaterial vorgekühlt und bei Raumtemperatur der Umformstation zugeführt, so kann das Verpackungsmaterial im Querschnitt an den äusseren Kunststoffschichten einen Temperaturgradienten mit gegen die Mitte des Verpackungsmaterials abnehmender Temperatur aufweisen. Wird beispielsweise das Verpackungsmaterial unmittelbar vor oder während der Umformung, z.B. durch die Stempel- oder Matrizenoberfläche, gekühlt, so kann das Verpackungsmaterial im Querschnitt an den äusseren Kunststoffschichten einen Temperaturgradienten mit gegen die Mitte des Verpackungsmaterials zunehmender Temperatur aufweisen.

Wie bereits erwähnt, erhöht die Kühlung des Verpackungsmaterials die Festigkeit der Kunststoffschichten, insbesondere der an der Metallfolie haftenden Kunststoffschichten. Des weiteren stabilisiert sich bei tieferen Temperaturen auch die Gefügestruktur der Aluminium-folie zunehmend, was wiederum dessen Festigkeit erhöht. Dadurch können bei fortlaufender Dehnung während der Umformung Einschnürungen oder Ausdünnungen in der Metallfolie und somit auch Riss- oder Porenbildung vermieden werden. Die Aluminiumfolie erfährt vielmehr eine gleichmässige, homogene Abflachung.

Des weiteren kann sich durch die Kühlung die Molekularstruktur des Kunststoffes, insbesondere von Polyvinylchlorid, Polyamid oder Polypropylen, irreversible verändern, derart dass nach dem Umformen eine erhöhte Festigkeit des Kunststoffes auch bei Wiedererwärmung des Verpackungsmaterials, z.B. auf Raumtemperatur, erhalten bleibt. Die geformte Vertiefung oder Vertiefungen einer Formverpackung sind dadurch weniger anfällig auf Dellenbildung.

Die Metallfolie des Verpackungsmaterials kann aus z.B. Stahl, Eisen, Kupfer und bevorzugt aus Aluminium sein. Mitumfasst sind auch Metallfolien aus Legierungen, enthaltend im überwiegendem Masse eines der genannten Metalle.

Bevorzugte Folien aus Aluminium können beispielsweise aus Aluminium einer Reinheit von wenigstens 98,0 %, zweckmässig 98,3 %, vorteilhaft 98,5 % und insbesondere 98,6 % sein, wobei der Rest auf 100 % die begleitenden Verunreinigungen darstellen. Im weiteren können beispielsweise Aluminiumfolien des Typs AlFeSi oder des Types AlFeSiMn angewendet werden. Die genannten Aluminiumwerkstoffe eignen sich insbesondere für streckziehfähige Verpackungsmaterialien.

Weitere in Verpackungsmaterialien verwendbare Aluminiumfolien sind beispielsweise aus AlMnlMg0,5 (AA 3005), A198,6, A199 oder AlFe1,5Mn (AA 8006, AA 8014). Die genannten Aluminiumlegierungen eignen sich insbesondere für tiefziehfähige Verpackungsmaterialien.

Die Kunststoffe des Verpackungsmaterials können beispielsweise als Schichten, Folien oder Folienverbunde vorliegen, wobei die Folien und Folienverbunde auch axial oder biaxial verstreckt sein können. Als Kunststoffe können z.B. thermoplastische Kunststoffe aus den Reihen der Polyolefine, der Polyamide, der Polyester, des Polyvinylchlorids und weitere verwendet werden. Die Kunststoffschichten zeichnen sich insbesondere dadurch aus, dass sich bei abnehmender Temperatur ihre Festigkeit erhöht, ohne dass die Kunststoffschicht ein sprödes Umformverhalten annimmt.

Des weiteren sind die Kunststoffe vorteilhaft amorph oder weisen eine mittlere bis tiefe Kristallinität auf.

Typische Beispiele von thermoplastischen Kunststoffen sind aus der Reihe der Polyolefine, wie Polyethylen (PE) und insbesondere Polyethylen hoher Dichte (HDPE, Dichte grösser als 0,944 g/cm$^3$), Polyethylen mittlerer Dichte (MDPE, Dichte 0,926-0,940 g/cm$^3$), lineares Polyethylen mittlerer Dichte (LMDPE, Dichte 0,926-0,940 g/cm3), Polyethylen niedriger Dichte (LDPE, Dichte 0,910-0,925 g/cm$^3$) und lineares Polyethylen niedriger Dichte (LLDPE, Dichte 0,916-0,925 g/cm$^3$). Die PE-Folien können mono- oder biaxial verstreckt sein. Weitere Beispiele von Polyolefinen sind Polypropylene, wie cast-Polypropylen, uni- oder biaxial verstrecktes Polypropylen, und Poly-(1-buten), Poly-(3-methylbuten), Poly-(4-methylpenten) oder Copolymere davon sowie Cyclo-Olefin-Copolymere (COC). Weiters können die Kunststoffe aus der Reihe der Polyester wie Polyethylenterephthalat (PET), Polyester des Typus PEN, oder aus der Reihe der Polyamide (PA), wie orientiertes Polyamid, sein. Weitere mögliche Kunststoffe sind Polyvinylchlorid (PVC) oder Polyvinylidenchlorid (PVDC).

Die Metallfolien und thermoplastischen Kunststoffe können z.B. durch Kaschieren, Kalandrieren oder Extrusionskaschieren zu Verbunden zusammengefügt werden. Zum Verbinden der Schichten können fallweise Kaschierkleber und Haftvermittler angewendet werden. Die zu verbindenden Oberflächen können durch Plasma-, Korona- oder Flammvorbehandlung modifiziert sein.

Beispiele von Verpackungsmaterialien sind Verbunde mit einer ersten Schicht, beispielsweise einer Folie oder einem Folienverbund aus den genannten thermoplastischen Kunststoffen, einer zweiten Schicht, in Form einer Metallfolie, zweckmässig aus Aluminium, und einer auf der noch freien Seite der Metallfolie angebrachten dritten Schicht, z.B. einer Siegelschicht aus einem Polyolefin, wie Polyethylen (PE) oder Polypropylen (PP), aus einem Polystyrol, aus Polyvinylchlorid (PVC), aus einem Polyamid (PA), wie PA 6, PA 66 oder PA 12 oder deren Copolymerisate.

Weitere anwendbare Verpackungsmaterialien können eine erste Schicht, beispielsweise eine Folie oder einen Folienverbund aus den vorstehend genannten thermoplastischen Kunststoffen, eine zweite Schicht in Form einer Metallfolie, zweckmässig aus Aluminium, und eine dritte Schicht, beispielsweise eine Folie oder Folienverbund oder eine extrudierte Schicht, aus den vorstehend genannten thermoplastischen Kunststoffen aufweisen. Weitere Schichten, insbesondere aussen liegende Schichten, wie Siegelschichten, können vorgesehen sein.

Die Verpackungsmaterialien können auf wenigstens einer ihrer aussen liegenden Seiten oder auf beiden aussen liegenden Seiten eine Siegelschicht, in Form einer siegelbaren Folie oder eines Siegellackes aufweisen. Die Siegelschicht ist bestimmungsgemäss in äusserster Lage im Verbundaufbau angeordnet. Insbesondere kann eine Siegelschicht auf einer aussen liegenden Seite des Verbundes vorgesehen sein, wobei diese Siegelschicht bei der Formverpackung gegen die Inhalts- resp. Schulterseite gerichtet sein soll, um das Ansiegeln einer Deckelfolie oder dergl. zu ermöglichen.

Besonders bevorzugt sind dabei Verpackungsmaterialien mit einer Aluminiumfolie und aussen liegenden Folien aus PVC oder einer ersten aussen liegenden Folie aus PVC und einer weiteren aussen liegenden Folie aus PA, insbesondere oPA. In zweckmässiger Ausgestaltung der Erfindung wird in letzterer Variante die PA-Folie weniger stark abgekühlt als die PVC-Folie, da letztere Folie in Bezug auf die Brüchigkeit tieferen Temperaturen ausgesetzt werden kann als die PA-Folie.

In einer ersten Ausführung enthalten die Verpackungsmaterialien eine Metallfolie aus einem der vorgenannten Metallen, insbesondere aus Aluminium, in einer Dicke von 8 bis 90 μm, zweckmässig 12 bis 80 μm, und bevorzugt 40 bis 60 μm sowie Kunststoffschichten aus den vorgenannten Kunststoffen und mit einer Dicke von 12 bis 150 μm, zweckmässig 15 bis 100 μm, und bevorzugt 20 bis 30 μm.

Die Verpackungsmaterialien erster Ausführung enthalten insbesondere Schichtaufbauten der vorstehend beschriebenen Art. Besonders typische Beispiele von Verpackungsmaterialien der ersten Ausführung sind:

| | |
|---|---|
| oPA 25 / Al 45 / PVC 60, | oPA 25 / Al 60 / PVC 60, |
| oPA 25 / Al 45 / PVC 100, | oPA 25 / Al 60 / PVC 100, |
| oPA 25 / Al 45 / oPA 25, | Al 120 / PP 50, |
| oPA 25 / Al 60 / PE 50, | oPA 25 / Al 60 / PP 60, |
| oPA 25 / Al 45 / PE-beschichtet, | oPA 25 / Al 45 / cPA 25, |
| oPA 25 / Al 45 / oPVC 30, | oPA 25 / Al 60 / oPA 25 / EAA 50, |
| oPET 25 / AL 45 / PVC 60, | oPET 25 / AL 45 / oPET 25, |
| cPP 60 / oPA 25 / Al 60 / cPP 60 und | oPA 25 / Al 60 / oPA 25 / HS-Lack, |

wobei oPA für orientiertes Polyamid, cPA für gegossenes (cast) Polyamid, PVC für Polyvinylchlorid, oPVC für orientiertes Polyvinylchlorid, PE für Polyethylen, PP für Polypropylen, cPP für gegossenes (cast) Polypropylen, EAA für Ethylenacrylsäure und A1 für Aluminium steht und die Ziffern für die Schicht-, resp. Foliendicke in μm stehen. HS-Lack hat die Bedeutung von Heiss-Siegellack.

Verpackungsmaterialien der ersten Ausführungsart eignen sich insbesondere zum Streckziehen.

Verpackungsmaterialien einer zweiten Ausführungsart enthalten oder bestehen aus einer ein- oder beidseitig lackierten Metallfolie aus einem der vorstehend beschriebenen, geeigneten Metalle, insbesondere aus Aluminium. Die Metallfolie kann beispielsweise eine Dicke von 50 - 150 μm, insbesondere von 60 - 100 μm, und die Lackschicht eine Dicke von 3 - 20 μm, insbesondere von 3 -10 μm aufweisen. Geeignete Lacke sind z.B. Lacke auf der Basis von Acrylaten, Epoxy-, Polyurethan-, Polyvinyl-, Polyester-, Melamin- oder Harnstoffharzen, Zellulosenitrat und Mischungen derselben. Die Lacke können lösemittelbasierend oder auf wässriger Basis sein oder können Ein-, Zwei- oder Mehrkomponenten-Systeme sein. Bevorzugt werden Lackspezifikationen basierend auf aromatischen Co-Polyester, Polyurethan oder Polyolefinen wie Polypropylen einer Dicke von 3 - 20 μm, insbesondere von 3 -10 μm. Die Lacke sind beispielsweise durch Trocknen, durch Wärme, chemisch und/oder durch Strahlen (UV; Elektronenstrahlen; IR) härtbar.

Die Verpackungsmaterialien der zweiten Ausführungsart eignen sich beispielsweise zum Streckziehen und insbesondere zum Tiefziehen.

Verpackungsmaterialien einer dritten Ausführungsart sind wenigstens einseitig lackierte Metallfolien aus einem der vorstehend beschriebenen geeigneten Metalle. Die Dicke der Metallfolie beträgt zwischen 50 und 150 μm und vorteilhaft zwischen 80 bis 110 μm. Die Lackierung weist beispielsweise eine Dicke von 3 bis 40 μm auf. Zweckmässig ist auf einer anderen freien Seite der Metallfolie ein Siegellack bzw. eine siegelfähige Schicht, z.B. aus Polypropylen, aufgebracht. Geeignete Lacke sind beispielsweise vorstehend unter den Verpackungsmaterialien der zweiten Ausführungsart beschriebene Lacke.

Beispiele von Verpackungsmaterialien der dritten Ausführungsart sind:

Lackschicht / Al 110/PP 50;
Lackschicht / Al 90 / PP 50;
Lackschicht / Al 90 / PP 30;

wobei PP für Polypropylen und Al für Aluminium steht und die Ziffern für die Schicht-, resp. Foliendicke in μm stehen.

Weitere Beispiele von Verpackungsmaterialien einer dritten Ausführungsart sind z.B. Folien aus einer AlMn1Mg0,5-Legierung (AA 3005) mit einer Dicke von 70 bis 110 μm, insbesondere von 85 bis 95 μm, mit einer aussen liegenden blanken Seite auf der ersten freien Seite und einer auf die zweite freie Seite über eine Lackkaschierung mit einem Flächengewicht von 4,0 bis 6,0 g/m2, insbesondere von 5,0 g/m2, aufgebrachten Folie aus Polypropylen (PP) einer Dicke von z.B. 20 bis 60 μm, insbesondere von 30 bis 50 μm. Anstelle einer aussen liegenden blanken Seite kann auch eine Einbrennlackierung mit einem Flächengewicht von 2 bis 5 g/m2, insbesondere von 3,5 g/m2, auf der Aluminiumfolie vorgesehen sein.

Weitere Verpackungsmaterialien der dritten Ausführungsart bestehen z.B. aus einer Al-Folie (Aluminium-Folie) einer A198,6-Legierung mit einer Dicke von 50 bis 70 μm, insbesondere von 60 μm sein, wobei die Al-Folie eine äussere Glanzseite blank oder mit Druckvorlack mit einer Flächenmasse von 1,3 bis 1,7 g/m2, insbesondere von 1,5 g/m2, und eine innere Mattseite mit einem Haftvermittler mit einem Flächengewicht von 1,2 bis 1,6 g/m2, insbesondere von 1,4 g/m2, und einer auf die Mattseite bzw. auf den Haftvermittler aufgebrachten schälfähigen Beschichtung aus Polypropylen (PP) mit einem Flächengewicht von 20 bis 30 g/m2, insbesondere von 25 g/m2. Anstelle eines Druckvorlackes kann auf der Glanzseite auch eine Einbrennlackierung mit einem Flächengewicht von 2 bis 5 g/m2, insbesondere von 3 g/m2, vorgesehen sein.

Verpackungsmaterialien der dritten Ausführungsart eignen sich insbesondere zum Tiefziehen.

In einer zweckmässigen Ausführung des erfindungsgemässen Verfahrens wird das gekühlte Verpackungsmaterial einer Streckziehumformung unterzogen, wobei die Streckziehumformung auch Teil eines mehrstufigen Streckziehens, oder Teil einer Kombination von Streckmit einem Tiefziehen oder einem anderen Umformschritt sein kann. Das Umformverfahren kann somit einen, zwei oder mehrere Umformschritte beinhalten, wobei in wenigstens einem der Umformschritte ein erfindungsgemäss gekühltes Verpackungsmaterial streckgezogen wird.

Das Streckziehen bzw. der Streckziehschritt erfolgt bevorzugt durch einen auf das fixierte Verpackungsmaterial nieder oder hoch fahrenden Stempel. Es kann jedoch auch ein viskoses Druckmedium, wie Druckluft oder eine Flüssigkeit, zum Streckziehen des fixierten Verpakkungsmaterials eingesetzt werden. Des weiteren kann das Streckziehen auch durch Ausüben eines Vakuums auf die Oberfläche des fixierten Verpackungsmaterials erfolgen.

In weiterer Ausführung der Erfindung kann beispielsweise ein Verfahren mit einer Matrize und Niederhalter und zwei oder mehreren Stempeln als Vorrichtung, die nacheinander in die Gesenköffnungen einer Matrize abgesenkt und wieder angehoben werden, ausgeführt werden, wobei das Verpackungsmaterial während wenigstens einem der Verformungsschritte gekühlt wird. Die Stempel, resp. die Stempelkörper, können an ihren verformungswirksamen Oberflächen unterschiedliche Reibungen aufweisen. Das Verfahren kann derart ausgeführt werden, dass die Stempel koaxial oder teleskopisch ineinander angeordnet sind.

Da, wie vorstehend beschrieben, durch die Umformung von erfindungsgemäss gekühlten Verpackungsmaterialien die Festigkeit der Formverpackung gegenüber einer kaltumgeformten Formverpackung in der Regel erhöht ist und auch beim Tiefziehen ein lokales Dehnen des Verpackungsmaterials vorkommt, erweist es sich als zweckmässig die erfindungsgemässe Kühlung des Verpackungsmaterials auch vor und/oder während eines Tiefziehens anzuwenden. Das Tiefziehen wird ebenfalls zweckmässig mittels Matrize und Stempel durchgeführt.

Das Verpackungsmaterial wird beim Streck- oder Tiefziehen zweckmässig mittels eines in eine Gesenköffnung einer Matrize niederfahrenden Stempels umgeformt. Das Verpackungsmaterial und insbesondere die während des Umformprozesses der Stempeloberfläche anliegende Kunststoffschicht des Verpackungsmaterials wird zweckmässig durch eine gekühlte verformungswirksame Stempeloberfläche zu Beginn und/oder während des Umformens gekühlt, wobei Mittel zur Kühlung der verformungswirksamen Stempeloberfläche vorgesehen sind.

Die Stempeloberfläche weist vor und insbesondere während einem Umformen, d.h. einem Streck- oder Tiefziehen beispielsweise Temperaturen von weniger als +10°C, vorzugsweise weniger als +5°C, vorteilhaft weniger als 0°C, insbesondere weniger als -5°C und von höher als -100°C, vorzugsweise höher als -50°C, vorteilhaft höher als -30°C, insbesondere höher als -20°C auf.

Die Kontaktzeit zwischen dem Verpackungsmaterial und der verformungswirksamen Stempeloberfläche während der Umformung, d.h. die Kühldauer, beträgt bei einem Streckziehen zweckmässig rund 0,05 bis 5 s (Sekunden), vorzugsweise 0,1 bis 1 s. Bei einem Tiefziehen kann die Kontaktzeit z.B. 0,1 bis 3 s, insbesondere 0, 4 bis 1 s, betragen.

Zur Kühlung des Stempels kann ein Kühlmedium, zweckmässig eine Flüssigkeit, insbesondere eine wasserhaltige Flüssigkeit, vorzugsweise ein Alkohol-Wassergemisch oder ein Gas bzw. Flüssig-Gas, zweckmässig Stickstoff, innerhalb des Stempels zur Zirkulation gebracht werden. Besonders geeignet als Kühlmedium ist ein Glykol-Wasser-Gemisch.

Zur Kühlung der verformungswirksamen Stempeloberfläche kann in einer weiteren Ausgestaltung der Erfindung auch eine Peltier-Kühlung unter Verwendung von Peltier-Elementen eingesetzt werden. Des weiteren erhält man durch das elektrische Nacheinanderschalten von mehreren Peltier-Elementen, welches eine thermische Parallel-Schaltung bewirkt, eine Peltierzelle, die sich besonders gut als Kühlelement zur Kühlung der räumlich begrenzten, verformungswirksamen Stempeloberfläche eignet.

Anstelle oder zusammen mit einer Stempelkühlung können auch andere bzw. zusätzliche Massnahmen zur Kühlung des Verpackungsmaterials vor und/oder während der Umformung vorgesehen sein. So kann beispielsweise das Verpackungsmaterial oder dessen Zuschnitte vor dem Umformen durch eine Kühlvorrichtung geführt werden. Weiters können weitere Umformwerkzeugteile wie Niederhalter, Matrize, ev. Gesenkform und dergl. sowie die nahe Umgebung der Umformeinrichtung gekühlt sein.

Der gekühlte Stempel resp. Stempelkörper kann eine zylindrische Form, Kegelform, Kegelstumpfform, Pyramidenform, Pyramidenstumpfform eine Kugelsegmentform, Kalottenform, Tonnenform oder dergl. aufweisen. Der Stempel kann senkrechte oder steile Seitenwände oder weniger steile bzw. abgeschrägte Seitenwände aufweisen und die Kante oder der Rand zum Stempelboden kann einen Radius aufweisen oder der Übergang zum Stempelboden kann gerundet sein oder eine rundliche Form aufweisen.

Der Stempel zum Streck- oder Tiefziehen kann eine verformungswirksame Oberfläche niedriger Reibung aufweisen. Beim Stempel mit einer verformungswirksamen Oberfläche niedriger Reibung weist zweckmässig wenigstens die verformungswirksame Oberfläche, d.h. die Oberfläche des Stempels, resp. der Stempelkörper, die mit dem Verpackungsmaterial in Berührung kommt, eine niedrige Reibung auf. Mit niedriger Reibung wird in vorliegendem Falle eine Reibung nach der Vorschrift BS 2782 Method 311 A mit Werten von beispielsweise 0,3 oder darunter bis 2,1 (dimensionslose Zahl) umfasst. Die Schicht niedriger Reibung kann beispielsweise Metalle, wie Stahl, oder Kunststoffe, wie Polytetrafluorethylen, Polyoxymethylen (Polyacetal, POM), Polyethylen oder Polyethylenterephthalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung können keramische Schichten oder graphit-, bomitrid- oder molybdändisulfidhaltige Schichten sein.

Die Stempeloberfläche ist vorzugsweise unmittelbar vor dem Umformen teil- oder vollflächig mit einem Film oder Schicht aus zu Eis kristallisiertem Wasser beschichtet. Das Wasser ist zweckmässig aus der Feuchtigkeit der Umgebungsluft kondensiert bzw. sublimiert oder durch Aufsprühen auf die Stempeloberfläche aufgebracht und durch die gekühlte Stempeloberfläche zu Eis kristallisiert. Der Eisfilm schmilzt während des Umformens durch die Druckeinwirkung der Stempeloberfläche teilweise oder vollständig.

Die Reibung zwischen dem zu verformenden Material und der Stempeloberfläche kann somit durch an der verformungswirksamen Oberfläche des unterhalb 0°C abgekühlten Stempels haftende Eiskristalle, die während des Umformens teilweise oder vollständig zu Wasser schmelzen und einen dünnen Gleitfilm ausbilden, herabgesetzt sein. Die Anfrierung der Eiskristalle an die verformungswirksame Oberfläche des gekühlten Stempels vor der Umformung kann spontan aus der vorhandenen Luftfeuchtigkeit erfolgen. Es können auch Mittel zur Kontrolle des Wassergehaltes der Umgebungsluft bzw. der Umgebungsatmosphäre vorgesehen sein, was eine kontrollierte Beschichtung der Stempeloberfläche mit Eiskristallen und somit eine kontrollierte Reibung zwischen Stempeloberfläche und dem Verpackungsmaterial ermöglicht. Weiters können Massnahmen zur gezielten Beschichtung der verformungswirksamen gekühlten Oberfläche der Stempel mit Eiskristallen, z.B. durch Besprühung mit Wasser, vor der Umformung vorgesehen sein.

Da Dank der Abkühlung des Stempels unter 0°C der oben beschriebene reibungsmindernde Effekt durch schmelzende Eiskristalle zunutze gemacht werden kann, können beispielsweise auch kostengünstigere Stempel mit verformungswirksamen Oberflächen höherer Reibung eingesetzt werden.

Wie früher erläutert kann die Festigkeit der Kunststoffschichten des Verpackungsmaterials während des Umformens insbesondere bei einem Streckziehen auch durch die Dehnungsrate, d.h. die Dehnung in einem bestimmten Zeitintervall, beeinflusst werden. Je grösser die Dehnungsrate ist, desto höher ist das E-Modul des Kunststoffes und desto fester verhält sich der Kunststoff. Das Verpackungsmaterial wird bevorzugt mit einer Dehnungsrate von $10^{-7}$ s$^{-1}$ bis $10^{-3}$ s$^{-1}$, vorzugsweise von $10^{-5}$ s$^{-1}$ bis $10^{-4}$ s$^{-1}$, umgeformt.

Wird das Verpackungsmaterial, wie vorstehend beschrieben, mittels Stempel, Niederhalter und Matrize streckgezogen, so beträgt die Stempelgeschwindigkeit zur Erreichung der vorgenannten Dehnungsraten zweckmässig wenigstens 100 mm/s, vorzugsweise wenigstens 500 mm/s und zweckmässig höchstens 10'000 mm/s, vorteilhaft höchstens 1'000 mm/s. Besonders bevorzugt sind Stempelgeschwindigkeiten zwischen 100 und 1'000 mm/s.

Die aus der Fläche des Verpackungsmaterials geformte Vertiefung oder Vertiefungen können napfartig, schalenartig, kalottenförmig, tonnenförmig, zylindrisch usw. sein. In der Draufsicht können die Vertiefungen rund, oval oder polygonal, wie zwei-, drei-, vier- oder mehreckig, sein. Bevorzugt sind Vertiefungen mit steilen bis senkrechten, möglichst geraden Seitenwänden und möglichst wenig gewölbtem Boden. Die Vertiefungen können von einer, in der Regel ebenen, Schulterfläche aus dem Verpackungsmaterial umgeben sein.

Die erfindungsgemässe Verfestigung der Kunststoffschichten während dem Umformen findet beispielsweise Anwendung in der Herstellung von Formverpackungen durch Streckziehen. Solche Formverpackungen können Warenträger, Boden- und auch Deckelteile und insbesondere Bodenteile für Blisterpackungen bzw. Durchdrückpackungen für Pharmazeutika, Nahrungs- und Genussmittel mit beispielsweise 1 bis 100, zweckmässig 3 bis 50 und vorteilhaft 5 bis 20 Vertiefungen oder Näpfen zur Aufnahme von Tabletten, Kapseln, Ampullen, Dragées oder auch Kleinteilen oder dergl. sein. Weiter findet die erfindungsgemässe Verfestigung der Kunststoffschichten während dem Umformen auch Anwendung in der Herstellung von Behältern durch Tiefziehen. Solche Behälter können Schalen für Nahrungs- und Genussmittel oder Tierfutter sowie Aerosoldosen und dergl. sein.

Durch die erfindungsgemässe Verfestigung der Kunststoffschichten vor bzw. während einer Streckziehumformung können äusserst geringe Tiefungsverhältnisse von bis 2,0 und somit optimalere Seitenwandsteigungen der Vertiefungen realisiert werden. Die Metallfolien von umgeformten Verpackungsmaterialien bleiben bei diesen Tiefungsverhältnissen porenfrei und die Ausschussrate ist erheblich vermindert. Dies bedeutet, dass im Verhältnis zum Füllgut Verpackungsmaterial eingespart werden kann. Dadurch kann die Verpackung attraktiver gestaltet und das ökologische Profil verbessert werden.

Wird die Verfestigung der Kunststoffschichten durch Abkühlen des Verpackungsmaterials erreicht, so bleibt üblicherweise auch bei Wiedererwärmung der Formverpackung auf Raumtemperatur eine verbesserte Festigkeit der Kunststoffschichten des Verpackungsmaterials, insbesondere in den Dehnungszonen, zurück. Dank dieser Eigenschaften können die Schichtdicken des Verpackungsmaterials kleiner dimensioniert werden, was wiederum eine Einsparung von Verpackungsmaterial bedeutet.

Beispiel:

In einem Umformversuch mittels Streckziehen wird ein Stempel von halbkugelförmiger verformungswirksamer Gestalt mit einer Teflon®-Oberfläche mit flüssigem Stickstoff von innen oder aussen auf eine Stempeltemperatur von -170°C abgekühlt. Ausgehend von dieser Stempeltemperatur werden in einer Umgebung mit Raumtemperatur Streckziehversuche an verschiedenen Zuschnitten von Verpackungsmaterialien mit dem Folien-Aufbau oPA 25 / Al 45 / PVC 60 vorgenommen, wobei die Folie aus PVC die dem Stempel zugewandte aussen liegende Folie ist. Die einzelnen Umformversuche verlaufen im Umfeld einer kontinuierlich bis zur Raumtemperatur zunehmenden Stempeltemperatur, so dass Formkörper aus besagten Verpackungsmaterialzuschnitten erhalten werden, die bei unterschiedlichen Stempeltemperaturen streckgezogen werden. Der Umformkontakt zwischen Stempeloberfläche und dem Verpackungsmaterialzuschnitt dauert rund 0,1 bis 0,5 s. Bei einer Streckziehumformung mit mittleren Stempeltemperaturen zwischen -10°C bis -40°C und insbesondere zwischen -20°C und -30°C wird eine optimale Umformbarkeit des Verpackungsmaterials in Bezug auf das Dehnungsverhalten der Aluminiumfolie festgestellt, ohne dass die Kunststoffschichten des Verpackungsmaterials ein sprödes Verhalten zeigen. Dadurch kann ein Tiefungsverhältnis von rund 2,0 realisiert werden. Die bei mittleren Stempeltemperaturen zwischen +15°C und +30°C (Raumtemperatur) streckgezogenen Formkörper erreichen hingegen die üblichen Tiefungsverhältnisse von lediglich 2,8.

**EP 1 086 800 A1**

**Patentansprüche**

1. Verfahren zum Herstellen von Formverpackungen mit einer oder mehreren Vertiefungen durch Umformen eines Verpackungsmaterials in einem oder mehreren Umformschritten, wobei das Verpackungsmaterial eine ein- oder beidseitig mit einer oder mehreren Kunststoffschichten kaschierten, extrusionsbeschichteten oder lackierten Metallfolie ist,
dadurch gekennzeichnet, dass
die Festigkeit einzelner oder mehrerer Kunststoffschichten des Verpackungsmaterials vor und/oder während wenigstens eines Umformschrittes durch gezielte Führung des Relaxationsverhaltens der Kunststoffschichten erhöht wird.

2. Verfahren nach Anspruch 1, dadurch gekennzeichnet, dass das Verpackungsmaterial oder wenigstens einzelne oder mehrere, insbesondere aussen liegende Kunststoffschichten des Verpackungsmaterials während wenigstens eines Umformschrittes Temperaturen von weniger als +10°C aufweisen.

3. Verfahren nach Anspruch 1, dadurch gekennzeichnet, dass das Verpackungsmaterial in wenigstens einem Umformschritt durch Streckziehen mit Dehnungsraten von $10^{-7}$ s$^{-1}$ bis $10^{-3}$ s$^{-1}$, vorzugsweise von $10^{-5}$ s$^{-1}$ bis $10^{-4}$ s$^{-1}$, umgeformt wird.

4. Verfahren nach Anspruch 2, dadurch gekennzeichnet, dass wenigstens ein Umformschritt eine Streck- oder Tiefziehumformung ist und das Verpackungsmaterial oder wenigstens aussen liegende Kunststoffschichten des Verpackungsmaterials vor und/oder während einer Streck- oder Tiefziehumformung auf eine Temperatur von weniger als +5°C, vorzugsweise weniger als 0°C, insbesondere weniger als -5°C und von höher als -100°C, vorzugsweise höher als -50°C, vorteilhaft höher als -30°C, gekühlt wird und die Umformung vorzugsweise mittels wenigstens einem Stempel mit einer verformungswirksamen Stempeloberfläche und einer Matrize erfolgt.

5. Verfahren nach Anspruch 4, dadurch gekennzeichnet, dass wenigstens einer der Umformschritte eine Streckziehumformung mittels wenigstens einem Stempel mit einer verformungswirksamen Stempeloberfläche, einer Matrize und einem Niederhalter ist, wobei das Verpackungsmaterial während der Streckziehumformung zwischen dem Niederhalter und der Matrize festgehalten wird und die Matrize wenigstens eine Gesenköffnung aufweist und das Verpackungsmaterial in die Gesenköffnungen der Matrize durch wenigstens einen Stempel vorgetrieben wird und das Verpackungsmaterial zu der Formverpackung mit einer oder mehreren Vertiefungen umgeformt wird.

6. Verfahren nach Anspruch 4, dadurch gekennzeichnet, dass wenigstens ein Umformschritt eine Streck- oder Tiefziehumformung ist und die Umformung vorzugsweise mittels wenigstens einem Stempel mit einer verformungswirksamen Stempeloberfläche und einer Matrize erfolgt und das Verpackungsmaterial und insbesondere die während der Umformung der Stempeloberfläche anliegende Kunststoffschicht durch die verformungswirksame Stempeloberfläche zu Beginn und/oder während des Umformens gekühlt wird und Mittel zur Kühlung der verformungswirksamen Stempeloberfläche eingesetzt werden.

7. Verfahren nach Anspruch 6, dadurch gekennzeichnet, dass die Stempeloberfläche vor und/oder während dem Umformen Temperaturen von weniger als +10°C, vorzugsweise weniger als +5°C, vorteilhaft weniger als 0°C, insbesondere weniger als -5°C und von höher als -100°C, vorzugsweise höher als -50°C, vorteilhaft höher als -30°C, aufweist.

8. Verfahren nach Anspruch 6, dadurch gekennzeichnet, dass zur Kühlung des Stempels ein Kühlmedium, zweckmässig eine Flüssigkeit, insbesondere eine wasserhaltige Flüssigkeit, vorzugsweise ein Alkohol-Wassergemisch oder ein Gas, zweckmässig Stickstoff, im Stempel zur Zirkulation gebracht wird, oder dass die Kühlung des Stempels eine Peltier-Kühlung ist.

9. Verfahren nach Anspruch 5, dadurch gekennzeichnet, dass die Kontaktzeit zwischen der verformungswirksamen Stempeloberfläche und dem Verpackungsmaterial 0,1 bis 5 s (Sekunden), vorzugsweise 0,5 bis 1 s beträgt.

10. Verfahren nach Anspruch 4, dadurch gekennzeichnet, dass wenigstens ein Umformschritt eine Streck- oder Tiefziehumformung ist und die Umformung vorzugsweise mittels wenigstens einem Stempel mit einer verformungswirksamen Stempeloberfläche und einer Matrize erfolgt und die verformungswirksame Stempeloberfläche vor dem Umformen teil- oder vollflächig eine Schicht oder einen Film aus zu Eis kristallisiertem Wasser aufweist und dieser Film während der Umformung vorzugsweise unter Druck schmilzt oder anschmilzt und als Gleitfilm zwischen Stempeloberfläche und dem Verpackungsmaterial wirkt.

11. Verfahren nach Anspruch 3, dadurch gekennzeichnet, dass das Verpackungsmaterial zwischen einem Niederhalter und einer Matrize festgehalten wird und die Matrize wenigstens eine Gesenköffnung aufweist und das Verpackungsmaterial in die Gesenköffnungen der Matrize durch wenigstens einen Stempel vorgetrieben wird und das Verpakkungsmaterial der Formverpackung mit einer oder mehreren Vertiefungen streckgezogen wird, wobei der Stempel mit einer Stempelgeschwindigkeit von wenigstens 100 mm/s, vorzugsweise wenigstens 500 mm/s und höchstens 10'000 mm/s, vorteilhaft höchstens 1'000 mm/s vorgetrieben wird.

12. Vorrichtung zum Herstellen von Formverpackungen aus einem Verpackungsmaterial mit wenigstens einer Vertiefung gemäss Anspruch 1, wobei die Umformung eine Streck- oder Tiefziehumformung ist und die Vorrichtung wenigstens einen Stempel und eine Matrize mit wenigstens einer Gesenköffnung enthält
dadurch gekennzeichnet, dass
der Stempel Mittel zum Kühlen der verformungswirksamen Stempeloberfläche aufweist.

13. Vorrichtung nach Anspruch 12, dadurch gekennzeichnet, dass im Stempel Mittel zur Zirkulation eines Kühlmediums vorhanden sind, oder dass der Stempel eine Peltierzelle zur Kühlung der Stempeloberfläche enthält.

14. Formverpackung, insbesondere Blisterverpackung, hergestellt nach dem Verfahren gemäss Anspruch 1.

15. Formverpackung gemäss Anspruch 14, dadurch gekennzeichnet, dass die Formverpakkung aus einem Verpakkungsmaterial des Aufbaus, enthaltend oder bestehend aus

| | |
|---|---|
| oPA 25 / Al 45 / PVC 60, | oPA 25 / Al 60 / PVC 60, |
| oPA 25 / Al 45 / PVC 100, | oPA 25 / Al 60 / PVC 100, |
| oPA 25 / Al 45 / oPA 25, | Al 120 / PP 50, |
| oPA 25 / Al 60 / PE 50, | oPA 25 / Al 60 / PP 60, |
| oPA 25 / Al 45 / PE-beschichtet, | oPA 25 / Al 45 / cPA 25, |
| oPA 25 / Al 45 / oPVC 30, | oPA 25 / Al 60 / oPA 25 / EAA 50, |
| oPET 25 / AL 45 / PVC 60, | oPET 25 / AL 45 / oPET 25, |
| cPP 60 / oPA 25 / Al 60 / cPP 60 oder | oPA 25 / Al 60 / oPA 25 / HS-Lack |

ist, wobei oPA für orientiertes Polyamid, cPA für gegossenes (cast) Polyamid, PVC für Polyvinylchlorid, oPVC für orientiertes Polyvinylchlorid, PE für Polyethylen, PP für Polypropylen, cPP für gegossenes (cast) Polypropylen, EAA für Ethylenacrylsäure, Al für Aluminium und HS-Lack für Heiss-Siegellack steht und die Ziffern für die Schicht-, resp. Foliendicke in $\mu$m stehen.

16. Formverpackung gemäss Anspruch 15, dadurch gekennzeichnet, dass die Formverpakkung ein Verpackungsmaterial mit einem Aufbau

| | |
|---|---|
| oPA 25 / Al 45 / PVC 60, | oPA 25 / Al 60 / PVC 60, |
| oPA 25 / Al 45 / PVC 100, | oPA 25 / Al 60 / PVC 100 oder |
| oPA 25 / Al 45 / oPA 25, | |

ist.

17. Formverpackung gemäss Anspruch 14, dadurch gekennzeichnet, dass die Formverpakkung ein Verpackungsmaterial mit einem Aufbau

| | |
|---|---|
| Lackschicht / Al 110 / PP 50, | Lackschicht / Al 90 / PP 50 oder |
| Lackschicht / Al 90 / PP 30, | |

ist, wobei PP für Polypropylen und A1 für Aluminium steht und die Ziffern für die Schicht-, resp. Foliendicke in $\mu$m stehen.

18. Formverpackung gemäss Anspruch 14, dadurch gekennzeichnet, dass die Formverpakkung aus einer ein- oder beidseitig lackbeschichteten Aluminiumfolie einer Dicke von 50 - 150 µm ist.

**EP 1 086 800 A1**

## EUROPÄISCHER RECHERCHENBERICHT

**Europäisches Patentamt**

Nummer der Anmeldung

EP 99 81 0843

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 410 007 A (TOYO SEIKAN KAISHA LTD) 30. Januar 1991 (1991-01-30) | 1,3 | B29C51/14 B29C67/00 |
| A | * Seite 12, Absätze 2,3; Abbildungen 1-3,11 * | 13 | B32B15/08 B29C51/42 B29C51/08 |
| A | FR 2 105 038 A (SOLVAY) 28. April 1972 (1972-04-28) * Seite 5, Zeile 1 - Zeile 9; Abbildungen * | 1,3 | |
| X | FR 1 215 177 A (J. DUBOIS) 15. April 1960 (1960-04-15) * Abbildungen * | 1,12 | |
| A | DE 727 751 C (JUNKERS FLUGZEUG UND MOTORENWERKE) 8. Oktober 1942 (1942-10-08) * Seite 3, Zeile 8 - Zeile 16; Abbildung 3 * | 1,12 | |
| X | GB 1 553 975 A (BOSCH GMBH ROBERT) 17. Oktober 1979 (1979-10-17) * Ansprüche; Abbildungen * | 1,14-18 | **RECHERCHIERTE SACHGEBIETE (Int.Cl.7)** B29C B32B |
| X | US 5 879 612 A (OSTER HEINZ ET AL) 9. März 1999 (1999-03-09) | 1 | |
| A | * Spalte 6, Zeile 41 - Zeile 60 * <br><br> * Spalte 8, Zeile 21 - Zeile 27 * | 2,3,12, 14 | |

Der vorliegende Recherchenbericht wurde für alle Patentansprüche erstellt

| Recherchenort | Abschlußdatum der Recherche | Prüfer |
|---|---|---|
| DEN HAAG | 8. Februar 2000 | Kosicki, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**EP 1 086 800 A1**

**ANHANG ZUM EUROPÄISCHEN RECHERCHENBERICHT
ÜBER DIE EUROPÄISCHE PATENTANMELDUNG NR.**  EP 99 81 0843

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2000

| Im Recherchenbericht angeführtes Patentdokument | Datum der Veröffentlichung | Mitglied(er) der Patentfamilie | Datum der Veröffentlichung |
|---|---|---|---|
| EP 0410007 A | 30-01-1991 | JP 2263523 A | 26-10-1990 |
| | | JP 2504164 B | 05-06-1996 |
| | | WO 9009269 A | 23-08-1990 |
| | | US 5249447 A | 05-10-1993 |
| FR 2105038 A | 28-04-1972 | BE 772262 A | 17-03-1972 |
| FR 1215177 A | 15-04-1960 | KEINE | |
| DE 727751 C | | KEINE | |
| GB 1553975 A | 17-10-1979 | DE 2539353 A | 10-03-1977 |
| | | DE 2539354 A | 10-03-1977 |
| | | CH 607700 A | 13-10-1978 |
| | | FR 2322785 A | 01-04-1977 |
| | | JP 1258083 C | 29-03-1985 |
| | | JP 52045467 A | 09-04-1977 |
| | | JP 59034578 B | 23-08-1984 |
| | | CH 612858 A | 31-08-1979 |
| | | FR 2322680 A | 01-04-1977 |
| | | IT 1063653 B | 11-02-1985 |
| | | JP 52039479 A | 26-03-1977 |
| US 5879612 A | 09-03-1999 | AU 703723 B | 01-04-1999 |
| | | AU 7617196 A | 03-07-1997 |
| | | BR 9612127 A | 13-07-1999 |
| | | CA 2192040 A | 13-06-1997 |
| | | WO 9721534 A | 19-06-1997 |
| | | CN 1209089 A | 24-02-1999 |
| | | EP 0779143 A | 18-06-1997 |
| | | PL 326864 A | 26-10-1998 |

Für nähere Einzelheiten zu diesem Anhang : siehe Amtsblatt des Europäischen Patentamts, Nr.12/82